(19) Europäisches Patentamt
European Patent Office
Office européen des brevets

(11) **EP 4 769 973 A1**

(12) **EUROPEAN PATENT APPLICATION**

(43) Date of publication:
01.07.2026 Bulletin 2026/27

(21) Application number: 24223623.0

(22) Date of filing: 30.12.2024

(51) International Patent Classification (IPC):
*H04B 10/116* (2013.01)    *H04L 27/34* (2006.01)

(52) Cooperative Patent Classification (CPC):
H04B 10/116; H04L 27/34

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.12.2024 PT 2024119937

(71) Applicants:
• **NOS Inovação, S.A.**
**4460-191 Porto (PT)**
• **Universidade de Coimbra**
**3004-531 Coimbra (PT)**
• **Instituto de Telecomunicações**
**3810-193 Aveiro (PT)**

(72) Inventors:
• **PINTO SEQUEIRA DOS SANTOS GRAÇA, JORGE FILIPE**
**4460-191 SENHORA DA HORA, Porto (PT)**
• **NUNES FERREIRA, JOÃO MIGUEL**
**4460-191 SENHORA DA HORA, Porto (PT)**
• **CRAVO GOMES, MARCO ALEXANDRE**
**3040-584 Coimbra (PT)**
• **RAPOSO DE MEDEIROS, MARIA DO CARMO**
**3030-215 Coimbra (PT)**

(74) Representative: **do Nascimento Gomes, Rui**
**J. Pereira da Cruz, S.A.**
**Rua Vítor Cordon, 10-A**
**1249-103 Lisboa (PT)**

(54) **A VISIBLE LIGHT COMMUNICATION SYSTEM**

(57) It is disclosed a visible light communication system that includes a plurality of emitter units (2), such as LEDs, installed within a communication environment, each capable of emitting data-encoded visible light signals to be received by at least a legitimate receiver unit (3). At least a controller unit (1) is configured to coordinate the operation of the emitter units (2), managing power levels and timing of signals to be transmitted by each emitter unit (2), in order to optimize the data transmission and security.

Figure 1

**Description**

## TECHINCAL FIELD

The present application relates to the technical field of wireless communication systems, more specifically to Light Fidelity (LiFi) communication systems.

## PRIOR ART

Visible Light Communications (VLC) use visible light, typically transmitted by Light Emitting Diodes (LEDs), to transmit data wirelessly through intense modulation, and a photodiode detects the signal at a receiver using the direct detection principle. A VLC architecture is designed as a direct point-to-point data communication method, essentially as a cable replacement, and offers a wide band free spectrum, which means it is not subject to the spectrum limitations of traditional radio frequencies. This free spectrum is particularly useful in a scenario where the demand for wireless communications is increasing exponentially. Furthermore, as a VLC system typically use LEDs for transmitting data, it is possible to reduce installation and operational costs. In fact, LEDs are components already widely used, for example in indoor environments, for lighting purposes, making them a low-cost and easily implementable solution for communication systems.

VLC communication channels are mainly line-of-sight (LOS) and therefore offer some degree of physical layer security (PLS). However, an eavesdropper, i.e., an unintended receiver, located in the same illuminated area can potentially intercept communications and therefore additional PLS mechanisms are needed. In fact, unlike RF signals which can be more easily transmitted, VLC systems use light that naturally spreads and can be more challenging to contain to a specific area, therefore PLS is a fundamental safeguard to ensure that only legitimate receiver can receive the transmitted signal.

In recent years, to provide security in VLC systems, algorithms have been developed at higher protocol layers, which, despite their sophistication, are increasingly vulnerable to advanced decryption techniques. Threats such as eavesdropping and unauthorized data interception underscore the importance of developing security in PLS as a complement to cryptography. This concept takes advantage of the imperfections of the transmission channels, such as their random nature, to ensure secure communications.

The present solution intends to innovatively overcome such issues.

## SUMMARY OF THE DISCLOSURE

It is an object of the present disclosure a visible light communication system that employs constellation decomposition to provide enhanced PLS in VLC environments. By decomposing and transmitting signal constellations across multiple emitter units, that is, across multiple light sources, whose relative positions to a legitimate receiver unit are known, the system is able to configure the power and phase delay of each signal constellation to ensure that only legitimate receivers are able to accurately reconstruct the transmitted data, thus preventing potential eavesdroppers.

## DESCRIPTION OF FIGURES

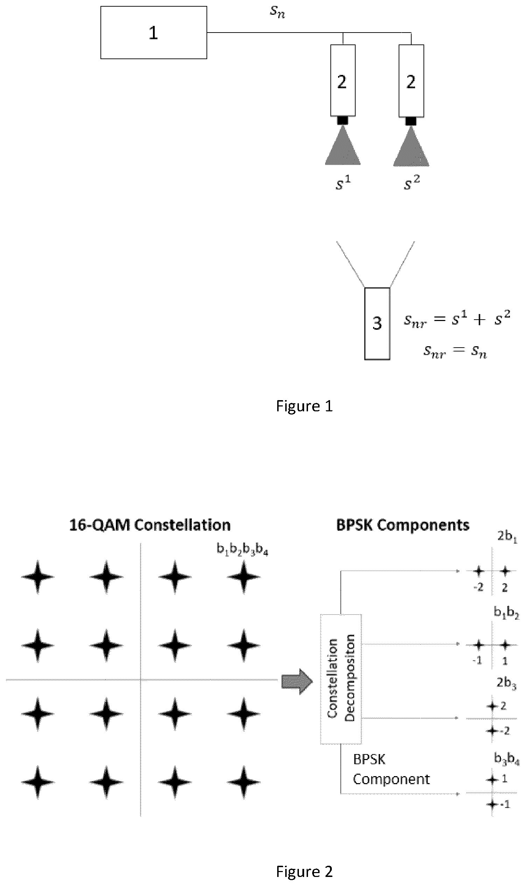

Figure 1 is a representation of a block diagram of a particular embodiment of the VLC system disclosed, comprised by two emitter units and one legitimate receiver unit. The reference signs represent:

1 - controller unit;
2 - emitter unit;
3 - legitimate receiver unit;
$s_n$ - 16-QAM (Quadrature Amplitude Modulation) constellation signal of the original data signal to be transmitted;
$s^1$ - first sub-constellation signal constituted by 4-bits QPSK (Quadrature Phase Shift Keying) signals, to be transmitted by a first emitter unit;
$s^2$ - second sub-constellation signal constituted by 4-bits QPSK signals, to be transmitted by a second emitter unit;
$s_{nr}$ - 16-QAM constellation signal reconstructed at the legitimate receiver unit, by summing the two sub-constellations, $s^1$ and $s^2$.

In connection with the system's embodiment illustrated by Figure 1, Figure 2 demonstrates the decomposition of a 16-QAM constellation into BPSK (Binary Phase Shift Keying) components using Gray Coding, and Figure 3 illustrates two examples of symbol constellation decomposition considering that a symbol of the 16-QAM constellation is represented by a bit sequence $S_1 = [0000]$ e $S_2 = [0001]$, and the respective reconstructed signal constellation, $s_{nr}^{[0000]}$ and $s_{nr}^{[0001]}$, at the legitimate receiver unit.

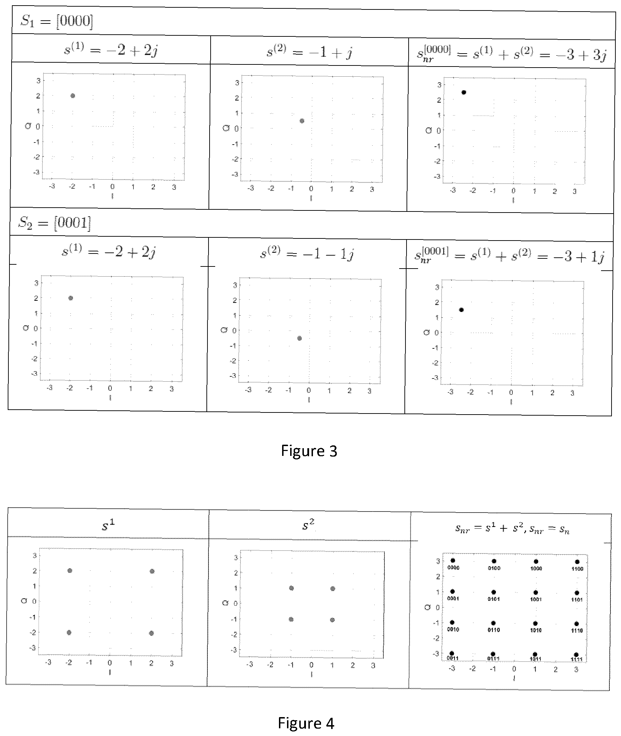

In Figure 4 it is illustrated the 16-QAM constellation diagram that represents all possible symbols, where the 16-QAM signal is obtained by summing two 4-bits QPSK signals $s^1$ and $s^2$, where $s_n^i$, $\forall_i$, are the QPSK components of symbol $s_n$ of the original M-QAM constellation.

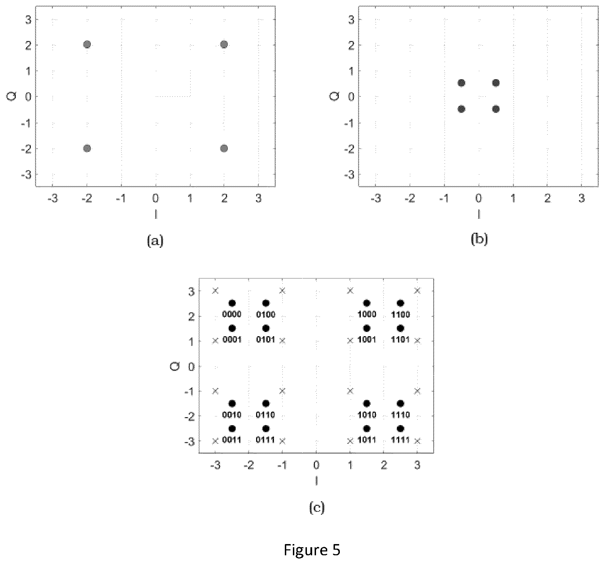

In Figure 5 it is illustrated a decomposition of 16-QAM constellation from 2 QPSK sub-constellations, to reflect the influence of the transmission path attenuation that each signal $s^1$, $s^2$ may suffer and the impact on the constellation $s_{nr}$. Figure 5a) illustrates the received sub-constellation $s^1$, Figure 5b) illustrates the received sub-constellation $s^2$, and Figure 5c) illustrates the received total sub-constellations, wherein the crosses indicate the ideal constellation points while the dots indicate the actual received constellation points.

## DETAILED DESCRIPTION

The more general configurations of the present disclosure are described in the Summary of the disclosure. Such configurations are detailed below in accordance with other advantageous and/or preferred embodiments of implementation of the present disclosure.

It is disclosed a Visible Light Communication (VLC) system that includes a plurality of emitter units (2), such as LEDs, installed within a communication environment, each capable of emitting data-encoded visible light signals to be received by at least a legitimate receiver unit (3). At least a controller unit (1) is configured to coordinate the operation of the emitter units (2), managing power levels and timing of signals to be transmitted by each emitter unit (2), in order to optimize the data transmission and security.

In fact, the core concept of the present disclosure is the use of constellation decomposition to enhance security in LiFi communication systems, specifically within VLC. More particularly, it is proposed a VLC system that employs constellation decomposition by breaking down complex signal constellations of a data signal to be transmitted via VLC channels, such as $M$-Pulse Amplitude Modulation (PAM) into simpler binary components, which are then mapped to Binary Phase Shift Keying (BPSK) or similar modulation formats, such as Quadrature Phase Shift Keying (QPSK), suitable for transmission via individual emitter units (2).

In this context, the transmission process involves distributing these decomposed signal components among the plurality of emitter units (2), each emitter unit (2) being positioned strategically at a predefined location, to cover an intended communication space, and the system is able to dynamically adjust the power and phase parameters of each decomposed signal component to ensure that they combine coherently only at a legitimate receiver's location.

For that purpose, the system includes at least one controller unit (1) that is operatively coupled to the plurality of emitter units (2), and may be configured to continuously monitor the communication environment and adjust the emitter units' parameters based on at least the respective locations and the legitimate receiver's location. The controller unit (1) may also adjust the emitter units' parameters based on environmental conditions likely to interfere with the VLC channel and to mitigate the impact of obstacles, ensuring robust and secure data transmission.

Therefore, the VLC system of the present disclosure implements a security mechanism that provides PLS, adding additional layers of protection beyond traditional cryptographic methods. More particularly, constellation decomposition and distribution of each sub-constellation among multiple emitter units (2) create an intentional disparity in signal reception for unintended or unauthorized receiver units (the non-legitimate receivers), leading to a distorted constellation and higher error rates. This approach increases the Bit Error Rate (BER) for non-legitimate receivers, effectively preventing them from accurately decoding the transmitted data signal, and ensuring that only the legitimate receiver unit (3) is able to correctly combine the signal components to form the original data signal.

In fact, when the signal components are transmitted from the plurality of emitter units (2) located at different locations, due to the different path attenuations and different delays, the received signal at a non-legitimate receiver, does not correspond to the ideal constellation, and therefore the BER will be degraded. Thus, the system uses these effects to provide PLS. According to the system of the present disclosure, the data stream signal may be split into $N_u$ sub-streams that are transmitted in parallel thanks to the spatial multiplexing capabilities of the emitter units (2) employed for beamforming purposes (typically $N_u < N_b$, where $N_b$ is the number of emitter units (2)). The data bits associated to each of the $N_u$ sub-streams are mapped into a given constellation (e.g., a QAM constellation) characterized by the ordered set $\mathfrak{S} = \{s_0, s_1, ..., s_{M-1}\}$, where $M$ is the number of constellation symbols, following the rule:

$$\left( \beta_n^{(\mu-1)}, \beta_n^{(\mu-2)}, ..., \beta_n^{(1)}, \beta_n^{(0)} \right) \mapsto s_n \in \mathfrak{S},$$

with $(\beta_n^{(\mu-1)}, \beta_n^{(\mu-2)}, \ldots, \beta_n^{(1)}, \beta_n^{(0)})$ denoting the binary representation of nth symbol, with $\mu = \log_2(M)$ bits. The constellations symbols are mapped in $N_m$ polar components, that are the result of the decomposition of signal $s_n$ in $M$ components given by:

$$s_n = g_0 + g_1 b_n^{(0)} + g_2 b_n^{(1)} + g_3 b_n^{(0)} b_n^{(1)} + g_4 b_n^{(1)} + (\ldots)$$

$$= \sum_{i=0}^{M-1} g_i \prod_{m=0}^{\mu-1} \left( b_n^{(m)} \right)^{\gamma_{m,i}} = \sum_{i=0}^{M-1} g_i b_n^{eq(i)}$$

(Eq.1)

with $(\gamma_{\mu-1,i}\ \gamma_{\mu-2,i}\ \cdots\ \gamma_{1,i}\ \gamma_{0,i})$ denoting the binary representation of $i$, $b_n^{(m)} = (-1)^{\beta_n^{(m)}}$ denoting the polar representation of the bit $\beta_n^{(m)}$, $b_n^{eq(i)} = \prod_{m=0}^{\mu-1} (b_n^{(m)})^{\gamma_{m,i}}$ denoting the $i^{th}$ polar component of $s_n$ and $N_m$ is the number of non-zero $g_i$ coefficients of the referred decomposition equation.

Next each of the $N_m$ polar components may be modulated as a BPSK signal, being each of these $N_m$ BPSK signals a serial representation of an Offset quadrature phase-shift keying (OQPSK) signal. Therefore, as can be seen from the Eq.1, each BPSK component transmitted by an emitter unit (2) is the result of a combination of several bits. Thus, even assuming an attack in which a non-legitimate receiver unit tries to focus on the light emitted by an emitter unit (2) in order to infer the BPSK sequence sent and, consequently, the value of the bit combination associated with that emitter unit (2), the mapping assigned to each emitter unit (2) may change with each new symbol emitted. In this way, the non-legitimate receiver unit would hardly be able to extract any information, especially for high-order decompositions. This continuous exchange, which can happen with each new symbol, is transparent to the legitimate receiver unit (3), because what it receives is the perfect combination of the different components, which only depends on their spatial location and on the location of the emitter units (2).

In addition, the signals may be separately amplified by $N_m$ nonlinear amplifiers before being transmitted by $N_m \times N_b$ emitter units (2). Spatial multiplexing effects combined with beamforming gains are achieved since each of these $N_m$ signals will be transmitted by $N_b$ emitter units (2), with appropriate phase shifts to provide directive beams.

Figure 1 discloses an embodiment of a VLC system comprised by two emitter units (2) and one legitimate receiver unit (3), and it incorporates a controller unit (1) capable of identifying a legitimate receiver's location and adjusting the signal power of the emitter units (2) as well as the delay phase between the transmissions of the constellation components from each emitter unit (2), to implement the PLS scheme. More particularly, considering that the original data signal to be transmitted is represented by a 16-QAM constellation, Figure 2 illustrates a particular decomposition of said 16-QAM constellation into BPSK components, considering that, for 16-QAM, the bits to be transmitted may be grouped in groups of 4 bits, $[b^1 b^2 b^3 b^4]$, and that it may be decomposed into 2 QPSK sub-constellations symbols, $s^1$, $s^2$, as follows:

$$s^1 = 2 \times b^1 - 2j \times b^3$$

$$s^2 = -\times b^1 \times b^2 + j \times b^3 \times b^4.$$

For example, as illustrated in Figure 3, the bit sequence [0 0 0 0] of the original data signal to be transmitted may corresponds to:

$$s^1 = -2 + 2j$$

$$s^2 = -1 + j.$$

And the sum of the two sub-constellations at the legitimate receiver unit (3) is:

$$s_{nr}^{[0000]} = s^1 + s^2 = -3 + 3j.$$

The constellation diagram that represents all possible symbols is represented in Figure 4, where the 16-QAM signal is obtained by summing the two 4-bits QPSK signals $s^1$ and $s^2$, where $s_n^i$, $\forall_i$, are the QPSK components of symbol $s_n$ of the original M-QAM constellation.

With this context, the PLS scheme may work as follows: for the legitimate receiver unit (3), located at any position in the communication environment, the different path attenuations may be compensated by adjusting the signal power transmitted by the emitter units (2) and the relative transmission delay of the two sub-constellation components, $s^1$ and $s^2$, resulting from the decomposition of a 16-QAM constellation representing the modulated original signal to be transmitted. More particularly, the first emitter unit (2) transmits the 4-bits QPSK signal, $s^1$, and the second emitter unit (2) transmits the 4-bits QPSK signal, $s^2$. The objective is for the legitimate receiver unit (3) to receive an ideal constellation signal, $s_{nr}$, resulting from the sum of the sub-constellation $s^1$ and $s^2$, while any other non-legitimate receiver, located at a different position receives a distorted signal constellation. In fact, these different signal components, $s^1$ and $s^2$, transmitted from emitter units (2) positioned at various locations within the communication environment, creates a unique transmission pattern that can only be correctly decoded at the specific legitimate receiver's location, where these components combine coherently. This multi-emitter unit setup significantly complicates an eavesdropper's task, as it would need to capture and correctly reassemble signals from all emitter units (2).

Considering a practical implementation scenario where the 4-bits QPSK signals $s^1$ and $s^2$ are transmitted using two emitter units (2) located in distinct locations, the transmission path attenuation from both emitter units (2) to a legitimate receiver unit (3) is different and therefore the signals $s^1$ and $s^2$ will suffer different attenuation. In this situation, the signal constellation reaching a non-legitimate receiver is distorted, as illustrated in Figure 5, where the attenuation of the $s^1$ signal component is considered twice as the attenuation of the $s^2$ signal component. As can be seen from figure 5.c), due to the different path attenuation the received constellation is not the ideal, in terms of system performance this effect will be translated to an increase of Error Vector Magnitude (EVM) and consequently an increase in BER.

The legitimate receiver unit (3) may estimate the VLC channel of each of emitter unit (2), $h_1,, \ldots, h_{Nm}$, using, for example, pilots sent using time-division multiplexing, from each emitter unit (2), which communicates via an uplink channel to the controller unit (1) that commands the operation of the emitter units (2); or the controller unit (1) has the legitimate receiver's spatial location information, which allows it to estimate, using state-of-the-art methodologies, the line-of-sight channel from each emitter unit (2) to the legitimate receiver unit (3). Note that a non-legitimate receiver will have a completely different VLC channel $\widetilde{h_1,}, \ldots, \widetilde{h_{Nm}}$.

Therefore, by transmitting each component via different emitter units (2), the received signal at the legitimate receiver unit (3), for the example of BPSK components is:

$$y_{Rx} = \sum_{i=0}^{M-1} g_i h_n b_n^{eq(i)} \neq K \times s_n$$

(Eq.2)

where $K$ is a real constant that translates the total gain of the VLC channel resulting from the combination of the various individual channels.

In order to guarantee the coherent combination for the legitimate receiver unit (3), each of the transmitting emitter units (2) may apply a precoding factor, $\alpha_n$, for example $\alpha_n = Kh^*_n/|h_n|^2$, such that

$$y_{Rx} = \sum_{i=0}^{M-1} g_i \frac{Kh_n^*}{|h_n|^2} h_n b_n^{eq(i)} = \sum_{i=0}^{M-1} g_i K b_n^{eq(i)} = Ks_n$$

(Eq.3)

This constitutes a second layer of security because a non-legitimate receiver, due to its different location, receives

$$y_{Rx}^{Eve} = \sum_{i=0}^{M-1} g_i \frac{K h_n^*}{|h_n|^2} \tilde{h}_n b_n^{eq(i)}$$

(Eq.4)

As $\tilde{h}_n \neq h_n$ and the final signal results from a combination of multiple components with different distortions, the non-legitimate receiver receives a severely degraded signal, which makes it impossible to extract the information.

## EMBODIMENTS

In a preferred embodiment of the visible light communication system of the present disclosure, it is comprised by at least one controller unit (1), n emitter units (2) and at least one legitimate receiver unit (3).

The at least one controller unit (1) comprises processing means configured to employ a constellation decomposition on an original data signal to be transmitted. In particular, the controller unit (1) is configured to process the constellation symbols of a $M$-ary constellation, $s_n$, representing the original data signal to be transmitted, in order to decompose said symbols into binary components that define $n$ sub-constellation components, $s^i$, wherein $n$ is equal or greater than 2, and $i = 1, \ldots ,n$.

The number of emitter units (2), n, is related with the number of sub-constellation components decomposed by the controller unit (1). In particular, the number of sub-constellation components defines the number of emitter units (2) of the system. Each emitter unit (1), in addition to a transmission mechanism that may be implemented through LED elements, it is comprised by processing means configured to encode the respective sub-constellation component, $s^i$, into a visible light data signal suitable for transmission over a visible light communication channel to at least one legitimate receiver (3).

A legitimate receiver unit (3), as opposed to an unintended receiver, is considered to be the desired receiver of the $n$ visible light signals, each one incorporating a specific sub-constellation, $s^i$, transmitted by the $n$ emitter units (2). For that purpose, the legitimate receiver unit (3) is provided with means for receiving the $n$ visible light data signals transmitted by the $n$ emitter units and it is comprised by processing means configured to sum said $n$ visible light data signals, in particular its respective sub-constellation components, $s^1$ to $s^n$, thereby reconstructing the original data signal, $s_{nr}$, wherein $s_{nr} = s_n$.

The system employs a PSL scheme by providing the controller unit (1) with the ability to configure the signal power and the relative transmission delay of each visible light data signals transmitted by the n emitter units (2), according to the location of the respective emitter units (2) relative to the location of the legitimate receiver unit (3). Thus, by identifying the position of the legitimate receiver unit (3) within the communication environment, allows the controller unit (1) to tailor the transmission parameters of each emitter unit (2) based at least on the legitimate receiver's location. In addition, it may also consider the conditions defining the communication environment that may influence the visible communication channel, and in a particular realization of the system, the controller unit (1) may employ a feedback mechanism for continuously adjust the transmission parameter of the emitter units (2), in order to maintain the signal integrity and security.

Therefore, the PSL schemes implies the system be able to adjust the power and transmission delay of the signals transmitted by the emitter units (2) to ensure coherent reception at a legitimate receiver unit's location. More particularly, by dynamically adjusting those emitter unit's parameters, it is possible to achieve coherent signal reception exclusively at a designated legitimate receiver's location, thereby mitigating unauthorized access by non-legitimate receivers. In fact, the decomposition and distribution of particularly configured signal components through multiple emitter units (2), result in a non-coherent combination of those signal components at unauthorized locations, thereby increasing the BER and EVM for potential eavesdroppers.

In one embodiment of the system, a controller unit (1) may be further comprised by receiving means adapted to receive the original data signal to be transmitted from an external communication source.

In another embodiment of the system, the complex constellation symbols, $s_n$, representing the original data signal to be transmitted may include Quadrature Amplitude Modulation (QAM) or Pulse Amplitude Modulation (PAM) symbols.

In one embodiment of the system, the controller unit (1) is configured to generate binary components with $\mu = \log_2 (M)$ number of bits, and said binary components, resulting from decomposing the complex constellation symbols of a M-ary constellation, $s_n$, are generated according to the following expression:

$$s_n = g_0 + g_1 b_n^{(0)} + g_2 b_n^{(1)} + g_3 b_n^{(0)} b_n^{(1)} + g_4 b_n^{(1)} + (\dots)$$

$$= \sum_{i=0}^{M-1} g_i \prod_{m=0}^{\mu-1} \left(b_n^{(m)}\right)^{\gamma_{m,i}} = \sum_{i=0}^{M-1} g_i b_n^{eq(i)}$$

(Eq.1)

where $(\gamma_{\mu-1,i}\ \gamma_{\mu-2,i}\ \cdots\ \gamma_{1,i}\ \gamma_{0,i})$ denoting the binary representation of $i$, $b_n^{(m)} = (-1)^{\beta_n^{(m)}}$ denoting the polar representation of the bit $\beta_n^{(m)}$, $b_n^{eq(i)} = \prod_{m=0}^{\mu-1} (b_n^{(m)})^{\gamma_{m,i}}$ denoting the $i^{th}$ polar component of $s_n$ and $g_i$ are the non-zero coefficients.

In another embodiment of the system, the controller unit (2) is configured to decompose complex constellation symbols of the $M$-ary constellation, $s_n$, into binary components, by employing Gray coding or Natural Binary coding. More particularly, the controller unit (1) is configured to generate binary components with $\mu = \log_2(M)$ number of bits, and said binary components, resulting from decomposing $s_n$, are generated by employing Gray coding, according to the following the formula:

$$s_n = \sum_{m=0}^{\mu-1} 2^{m-1} \prod_{m'=\mu-m+1}^{\mu} b_n^{m'}$$

(Eq.4)

wherein,

$b_n^m = 2\beta_n^m - 1$, and $\beta_n^m$ is a mth bit of a bit sequence $[\beta_n^{(1)}, \beta_n^{(2)}, \dots, \beta_n^{(\mu)}]$ corresponding to the nth symbol of the $M$-ary constellation.

In another embodiment of the system, each of the n sub-constellations, $s^i$, consists of Phase-Shift Keying symbols. More particularly, the $M$-ary constellation may be a 16-QAM constellation, and the controller unit (1) is configured to decompose the 16-QAM constellation symbols, $s_n$, into Binary Phase-Shift Keying (BPSK) symbols with 4 bits, $[b^1\ b^2\ b^3\ b^4]$ using Gray coding.

Considering a particular realization of the system as being comprised by two emitter units (2), the controller unit (1) is configured to decompose the complex constellation symbols, $s_n$, of the 16-QAM constellation into two sub-constellations, $s^1$ and $s^2$, each being represented by 4-bits Quadrature Phase-Shift Keying (QPSK) components. Each emitter unit (2) being configured to encode a sub-constellation into a visible light data signal suitable for transmission. More particularly, the controller unit (1) is configured to calculate the QPSK decomposed constellation symbols of the two sub-constellations, $s^1$, $s^2$, as follows:

$$s^1 = 2 \times b^1 - 2j \times b^3$$

$$s^2 = - \times b^1 \times b^2 + j \times b^3 \times b^4.$$

In its turn, the legitimate receiver unit (3) is configured to reconstruct the 16-QAM constellation symbols of the original data signal, $s_{nr}$ by summing the two sub-constellations $s^1$ and $s^2$, so that:

$$s_{nr} = s^1 + s^2.$$

In another embodiment of the system, each emitter unit (2) is configured to apply a precoding factor $\alpha_n$, to the visible light data signal to be transmitted; the $\dfrac{K h_n^*}{|h_n|^2}$, wherein,

$h_n$ is the VLC channel of an emitter unit (2), $K$ is a real constant that translates the total gain of the VLC channel resulting from the combination of the various individual channels.

Of course, the preferred embodiments shown above are combinable, in the different possible forms, being herein avoided the repetition all such combinations.

**Claims**

1. A visible light communication system comprising:

   - At least one controller unit (1) comprising processing means configured to employ a constellation decomposition on an original data signal to be transmitted, by decomposing complex constellation symbols of a *M*-ary constellation, $s_n$, into binary components defining $n$ sub-constellation components, $s^1, \ldots, s^n$; wherein $n \geq 2$;
   - n emitter units (2), wherein each emitter unit (2) being configured to encode a sub-constellation component, $s^i$, wherein $i = 1, \ldots, n$, into a visible light data signal and to transmit said visible light data signal;
   - At least one legitimate receiver unit (3) provided with means for receiving the n visible light data signals transmitted by the n emitter units (2); and being comprised by processing means configured to sum the sub-constellations $s^1$ to $s^n$, contained in the n visible light data signals received, thereby reconstructing the original data signal, $s_{nr}$, wherein $s_{nr} = s_n$;

   wherein,
   the controller unit (1) and the n emitter units (2) being operatively coupled so that the controller unit (1) is further configured to programme the signal power and the transmission delay of each visible light data signal according to the location of the respective emitter unit (2) relative to the location of the legitimate receiver unit (3).

2. The system according to claim 1, wherein a controller unit (1) further comprises receiving means adapted to receive the original data signal to be transmitted from an external communication source.

3. The system according to claims 1 or 2, wherein the complex constellation symbols of a *M*-ary constellation, $s_n$, include Quadrature Amplitude Modulation (QAM) or Pulse Amplitude Modulation (PAM) symbols.

4. The system according to any of the previous claims, wherein the controller unit (1) is configured to generate binary components with $\mu = \log_2(M)$ number of bits; and wherein,
   the controller unit (1) is configured to decompose the complex constellation symbols of a M-ary constellation, $s_n$, into binary components according to the following expression:

$$s_n = g_0 + g_1 b_n^{(0)} + g_2 b_n^{(1)} + g_3 b_n^{(0)} b_n^{(1)} + g_4 b_n^{(1)} + (\ldots)$$

$$= \sum_{i=0}^{M-1} g_i \prod_{m=0}^{\mu-1} \left( b_n^{(m)} \right)^{\gamma_{m,i}} = \sum_{i=0}^{M-1} g_i b_n^{eq(i)}$$

where $(\gamma_{\mu\text{-}1,i}\, \gamma_{\mu\text{-}2,i} \cdots \gamma_{1,i}\, \gamma_{0,i})$ denoting the binary representation of $i$, $b_n^{(m)} = (-1)^{\beta_n^{(m)}}$ denoting the polar representation of the bit $\beta_n^{(m)}$, $b_n^{eq(i)} = \prod_{m=0}^{\mu-1} \left( b_n^{(m)} \right)^{\gamma_{m,i}}$ denoting the $i^{th}$ polar component of $s_n$ and $g_i$ are the non-zero coefficients.

5. The system according to claim 4, wherein the controller unit (1) is configured to decompose complex constellation symbols of a *M*-ary constellation, $s_n$, into binary components by employing Gray coding or Natural Binary coding.

6. The system according to claim 5, wherein the binary components resulting from decomposing the complex constellation symbols of a *M*-ary constellation, $s_n$, are generated by employing Gray coding, according to:

$$s_n = \sum_{m=0}^{\mu-1} 2^{m-1} \prod_{m'=\mu-m+1}^{\mu} b_n^{m'}$$

wherein,

$b_n^m = 2\beta_n^m - 1$, and $\beta_n^m$ is a mth bit of a bit sequence $[\beta_n^{(1)}, \beta_n^{(2)}, ..., \beta_n^{(\mu)}]$ corresponding to the nth symbol of the *M*-ary constellation.

7. The system according to any of the previous claims, wherein each of the n sub-constellations, $s^i$, consists of Phase-Shift Keying symbols.

8. The system according to claims 6 and 7, wherein the *M*-ary constellation is a 16-QAM constellation; and the controller unit (1) being configured to decompose the 16-QAM constellation symbols, $s_n$, into Binary Phase-Shift Keying (BPSK) symbols with 4 bits, [$b^1$ $b^2$ $b^3$ $b^4$] using Gray coding.

9. The system according to claim 8, comprising two emitter units (2); wherein,

the controller unit (1) is configured to decompose the complex constellation symbols, $s_n$, of the 16-QAM constellation, into two sub-constellations, $s^1$ and $s^2$, each being represented by 4-bits Quadrature Phase Shift Keying (QPSK) components;
and wherein,
each emitter unit (2) being configured to encode a sub-constellation into a visible light data signal suitable for transmission.

10. The system according to claim 9, wherein the controller unit (1) is configured to calculate QPSK decomposed constellation symbols of the two sub-constellations, $s^1$, $s^2$, as follows:

$$s^1 = 2 \times b^1 - 2j \times b^3$$

$$s^2 = - \times b^1 \times b^2 + j \times b^3 \times b^4.$$

11. The system according to claim 10, wherein the legitimate receiver unit (3) is configured to reconstruct the 16-QAM constellation of the original data signal, $s_{nr}$, by summing the two sub-constellations $s^1$ and $s^2$, so that:

$$s_{nr} = s^1 + s^2.$$

12. The system according to any of the previous claims, wherein each emitter unit (2) is configured to apply a precoding factor $\alpha_n$, to the visible light data signal to be transmitted; optionally, $\alpha_n = \dfrac{K h_n^*}{|h_n|^2}$, wherein,

$h_n$ is the VLC channel of an emitter unit (2), *K* is a real constant that translates the total gain of the VLC channel resulting from the combination of the various individual channels.

13. The system according to any of the previous claims, wherein an emitter unit comprises a light-emitting diode.

$s_n$

1

2

2

$s^1$  $s^2$

3  $s_{nr} = s^1 + s^2$

$s_{nr} = s_n$

Figure 1

**16-QAM Constellation**  **BPSK Components**

$b_1b_2b_3b_4$

$2b_1$

-2 | 2

$b_1b_2$

-1 | 1

$2b_3$

+2

-2

Constellation Decompositon

BPSK Component

$b_3b_4$

+1

-1

Figure 2

| $S_1 = [0000]$ | | |
|---|---|---|
| $s^{(1)} = -2 + 2j$ | $s^{(2)} = -1 + j$ | $s_{nr}^{[0000]} = s^{(1)} + s^{(2)} = -3 + 3j$ |

| $S_2 = [0001]$ | | |
|---|---|---|
| $s^{(1)} = -2 + 2j$ | $s^{(2)} = -1 - 1j$ | $s_{nr}^{[0001]} = s^{(1)} + s^{(2)} = -3 + 1j$ |

Figure 3

| $s^1$ | $s^2$ | $s_{nr} = s^1 + s^2, s_{nr} = s_n$ |
|---|---|---|

Figure 4

(a)

(b)

(c)

Figure 5

Europäisches
Patentamt

European
Patent Office

Office européen
des brevets

# EUROPEAN SEARCH REPORT

**Application Number**

EP 24 22 3623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 988 255 B (UNIV ZHENGZHOU LIGHT IND) 9 December 2022 (2022-12-09) * the whole document * | 1-13 | INV. H04B10/116 H04L27/34 |
| A | PT 107 256 B (FACULDADE DE CIENCIAS E TECNOLOGIA DA UNIV NOVA DE LISBOA [PT]) 6 April 2018 (2018-04-06) * the whole document * | 1-13 | |
| A | TAN YINZHOU ET AL: "Coherent LiFi System With Spatial Multiplexing", IEEE TRANSACTIONS ON COMMUNICATIONS, IEEE SERVICE CENTER, PISCATAWAY, NJ. USA, vol. 69, no. 7, 20 April 2021 (2021-04-20) , pages 4632-4643, XP011865793, ISSN: 0090-6778, DOI: 10.1109/TCOMM.2021.3074216 [retrieved on 2021-07-13] * Section III * * figure 3 * | 1-13 | |
| A | MONTEZUMA PAULO ET AL: "Implementing Physical Layer Security Using Transmitters with Constellation Shaping", 2015 24TH INTERNATIONAL CONFERENCE ON COMPUTER COMMUNICATION AND NETWORKS (ICCCN), IEEE, 3 August 2015 (2015-08-03), pages 1-4, XP033225837, DOI: 10.1109/ICCCN.2015.7288418 [retrieved on 2015-10-02] * the whole document * | 1-13 | **TECHNICAL FIELDS SEARCHED (IPC)** H04B H04L |

-/--

The present search report has been drawn up for all claims

| Place of search | Date of completion of the search | Examiner |
|---|---|---|
| Munich | 12 June 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 24 22 3623

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MONTEZUMA PAULO ET AL: "On the Use of Multiple Amplifiers and Antennas for Efficient Directive Transmission with Large Constellations", MILCOM 2013 - 2013 IEEE MILITARY COMMUNICATIONS CONFERENCE, IEEE, 18 November 2013 (2013-11-18), pages 1597-1603, XP032563588, DOI: 10.1109/MILCOM.2013.271 [retrieved on 2014-02-07] * the whole document * | 1-13 | |
| A | RENDON GREGORY T ET AL: "Nested QPSK Encoding for Information Theoretic Security", 2018 IEEE INTERNATIONAL CONFERENCE ON COMMUNICATIONS (ICC), IEEE, 20 May 2018 (2018-05-20), pages 1-6, XP033378663, DOI: 10.1109/ICC.2018.8422678 [retrieved on 2018-07-27] * the whole document * | 1-13 | |

TECHNICAL FIELDS
SEARCHED (IPC)

The present search report has been drawn up for all claims

| Place of search | Date of completion of the search | Examiner |
|---|---|---|
| Munich | 12 June 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 4 769 973 A1**

## ANNEX TO THE EUROPEAN SEARCH REPORT
## ON EUROPEAN PATENT APPLICATION NO.

EP 24 22 3623

12-06-2025

| Patent document cited in search report | | Publication date | Patent family member(s) | | Publication date |
|---|---|---|---|---|---|
| CN 111988255 | B | 09-12-2022 | NONE | | |
| PT 107256 | B | 06-04-2018 | PT | 107256 A | 28-04-2015 |
| | | | WO | 2015065215 A1 | 07-05-2015 |

EPO FORM P0459

For more details about this annex : see Official Journal of the European Patent Office, No. 12/82